(19) Europäisches Patentamt
European Patent Office
Office européen des brevets

(11) **EP 4 557 813 A1**

(12) **EUROPEAN PATENT APPLICATION**
published in accordance with Art. 153(4) EPC

(43) Date of publication:
**21.05.2025 Bulletin 2025/21**

(21) Application number: **23851650.4**

(22) Date of filing: **01.08.2023**

(51) International Patent Classification (IPC):
**H04W 24/08** (2009.01)   **H04W 72/04** (2023.01)

(52) Cooperative Patent Classification (CPC):
**H04W 24/08; H04W 72/04**

(86) International application number:
**PCT/CN2023/110572**

(87) International publication number:
**WO 2024/032429 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 CN 202210961436**

(71) Applicant: **ZTE Corporation**
**Shenzhen, Guangdong 518057 (CN)**

(72) Inventors:
• **LU, Zhaohua**
**Shenzhen, Guangdong 518057 (CN)**

• **LIU, Wenfeng**
**Shenzhen, Guangdong 518057 (CN)**
• **ZHENG, Guozeng**
**Shenzhen, Guangdong 518057 (CN)**
• **XIAO, Huahua**
**Shenzhen, Guangdong 518057 (CN)**
• **WANG, Yuxin**
**Shenzhen, Guangdong 518057 (CN)**
• **LI, Yong**
**Shenzhen, Guangdong 518057 (CN)**
• **LI, Lun**
**Shenzhen, Guangdong 518057 (CN)**

(74) Representative: **Deambrogi, Edgardo et al**
**Jacobacci & Partners S.p.A.**
**Corso Emilia 8**
**10152 Torino (IT)**

(54) **BEAM MEASUREMENT METHOD, USER APPARATUS, BASE STATION, STORAGE MEDIUM AND PROGRAM PRODUCT**

(57)    The present disclosure discloses a beam measurement method, a user apparatus, a base station, a storage medium, and a program product. A beam measurement method is applied to a second communication device, and includes: transmitting beam recommendation indication information to a first communication device to cause the first communication device to determine a target test beam according to the beam recommendation indication information, wherein the target test beam is configured with a target reference signal resource; receiving the target test beam transmitted by the first communication device; and predicting and obtaining an optimal beam result according to the target reference signal resource, and transmitting optimal beam reporting indication information to the first communication device, wherein the optimal beam reporting indication information corresponds to the optimal beam result.

Transmit beam recommendation indication information to a first communication device to cause the first communication device to determine a target test beam according to the beam recommendation indication information, wherein the target test beam is configured with a target reference signal resource — S110

Receive the target test beam transmitted by the first communication device — S120

Predict and obtain an optimal beam result according to the target reference signal resource, and transmit optimal beam reporting indication information to the first communication device, wherein the optimal beam reporting indication information corresponds to the optimal beam result — S130

Fig. 2

## Description

## Cross-Reference to Related Application

This application claims priority to Chinese Patent Application No. 202210961436.1 filed on August 11, 2022, which is incorporated by reference in its entirety.

## Technical Field

The present disclosure relates to the technical field of communications, and in particular, to a beam measurement method, a user apparatus, a base station, a computer storage medium, and a computer program product.

## Background

At present, by an Artificial Intelligence (AI)-based beam management method, a base station only needs to transmit a reference signal in part of a beam space and uses an AI model to predict full beam space information and an optimal beam pair. Specifically, a deployed AI model uses measurement results of some sampled beams as model inputs to infer required beam measurement results. However, in an existing agreement, beams on both the base station and a User Equipment (UE) side are achieved based on dual transparency, meaning that beams transmitted by the base station are unknown to the UE side. Namely, it is uncertain whether the base station has transmitted beams that need to be measured by the UE side. Therefore, the UE side cannot ensure good prediction on the AI model based on the corresponding beams. It is not conducive to improving the accuracy of beam measurement by the AI model on the UE side.

## Summary

The following is a summary of the theme described in detail here. This summary is not intended to limit the protection scope of the claims.

Embodiments of the present disclosure provide a beam measurement method, a user apparatus, a base station, a computer storage medium, and a computer program product, which can reduce beam training expenses and improve the accuracy of beam measurement.

In a first aspect, the embodiments of the present disclosure provide a beam measurement method, including:

transmitting beam recommendation indication information to a first communication device, so that the first communication device to determine a target test beam according to the beam recommendation indication information, wherein the target test beam is configured with a target reference signal resource;

receiving the target test beam transmitted by the first communication device; and

predicting and obtaining an optimal beam result according to the target reference signal resource, and transmitting optimal beam reporting indication information to the first communication device, wherein the optimal beam reporting indication information corresponds to the optimal beam result.

In a second aspect, the embodiments of the present disclosure further provide a beam measurement method, including:

receiving beam recommendation indication information transmitted by a second communication device;

determining a target test beam according to the beam recommendation indication information, wherein the target test beam is configured with a target reference signal resource;

transmitting the target test beam to the second communication device, so that the second communication device to predict and obtain an optimal beam result according to the target reference signal resource; and

receiving optimal beam reporting indication information transmitted by the second communication device, wherein the optimal beam reporting indication information corresponds to the optimal beam result.

In a third aspect, the embodiments of the present disclosure further provide a beam measurement method, including:

determining a target test beam, wherein the target test beam carries beam indication information, and the beam indication information is used for indicating position information of the target test beam in a beam space;

transmitting the target test beam to a second communication device, so that the second communication device to predict and obtain an optimal beam result according to the beam indication information; and

receiving optimal beam reporting indication information transmitted by the second communication device, wherein the optimal beam reporting indication information corresponds to the optimal beam result.

In a fourth aspect, the embodiments of the present disclosure further provide a beam measurement method, including:

receiving a target test beam transmitted by a first communication device, wherein the target test beam is determined by the first communication device; the target test beam carries beam indication information, and the beam indication information is used for indicating position information of the target test beam in a beam space;

predicting and obtaining an optimal beam result according to the beam indication information, and transmitting optimal beam reporting indication information to the first communication device, wherein the optimal beam reporting indication information corresponds to the optimal beam result.

In a fifth aspect, the embodiments of the present disclosure further provide a user apparatus, including: at least one processor; and at least one memory, configured to store at least one program. The at least one program, when executed by the at least one processor, implements the beam measurement methods as described in the first aspect and the fourth aspect.

In a sixth aspect, the embodiments of the present disclosure further provide a base station, including: at least one processor; and at least one memory, configured to store at least one program. The at least one program, when executed by the at least one processor, implements the beam measurement methods as described in the second aspect and the third aspect.

In a seventh aspect, the embodiments of the present disclosure further provide a computer-readable storage medium, having processor-executable programs stored thereon. The processor-executable programs, when executed by a processor, are configured to implement the beam measurement method mentioned above.

In an eighth aspect, the embodiments of the present disclosure further provide a computer program product, including computer programs and computer instructions. The computer programs or the computer instructions are stored on a computer-readable storage medium; a processor of a computer device reads the computer programs or the computer instructions from the computer-readable storage medium; and the processor executes the computer programs or the computer instructions, so that the computer device to perform the beam measurement method mentioned above.

In the embodiments of the present disclosure, by transmitting beam recommendation indication information to a first communication device, so that the first communication device to only configure a reference signal resource on a recommended transmitted beam corresponding to the beam recommendation indication information. Namely, the first communication device only needs to configure a reference signal resource on a required target test beam and transmit the target test beam. This is conductive to reducing beam training expenses of the first communication device side. Furthermore, in this case, the required target test beam transmitted by the first communication device can be stably and reliably received, so that an optimal beam result can be obtained by performing beam model measurement according to the target test beam. It is favorable for improving the accuracy of beam measurement, thereby making up for the technical blank in the related method.

**Brief Description of the Drawings**

Fig. 1 is a schematic diagram of an implementation environment for implementing a beam measurement method according to an embodiment of the present disclosure;

Fig. 2 is a flowchart of a beam measurement method according to an embodiment of the present disclosure;

Fig. 3 is a schematic diagram of transmitting beam recommendation indication information in a beam measurement method according to an embodiment of the present disclosure;

Fig. 4 is a schematic diagram of transmitting first beam reporting indication information in a beam measurement method according to an embodiment of the present disclosure;

Fig. 5 is a schematic diagram of transmitting first beam reporting indication information in a beam measurement method according to another embodiment of the present disclosure;

Fig. 6 is a flowchart of transmitting optimal beam reporting indication information in a beam measurement method according to an embodiment of the present disclosure;

Fig. 7 is a flowchart of a beam measurement method according to another embodiment of the present disclosure;

Fig. 8 is a flowchart of determining a target test beam according to beam recommendation indication information in a beam measurement method according to an embodiment of the present disclosure;

Fig. 9 is a flowchart of determining a target test beam according to beam recommendation indication information in a beam measurement method according to another embodiment of the present disclosure;

Fig. 10 is a schematic diagram of an application scenario of beam indication information in a beam measurement method according to an embodiment of the present disclosure;

Fig. 11 is a flowchart of a beam measurement method according to another embodiment of the present disclosure;

Fig. 12 is a flowchart of determining a target test beam in a beam measurement method according to another embodiment of the present disclosure;

Fig. 13 is a flowchart of a beam measurement method according to another embodiment of the present disclosure;

Fig. 14 is a flowchart of a beam measurement method according to an embodiment of the present disclosure before transmitting beam recommendation indication information to a first communication device;

Fig. 15 is a schematic diagram of a user apparatus according to an embodiment of the present disclosure; and

Fig. 16 is a schematic diagram of a base station according to an embodiment of the present disclosure.

## Detailed Description of the Embodiments

In order to make the objectives, technical methods, and advantages of the present disclosure clearer, the following is a further detailed explanation of the present disclosure in conjunction with the accompanying drawings and embodiments. It should be understood that the specific embodiments described here are only intended to explain the present disclosure and are not intended to limit the present disclosure.

It should be noted that although a logical order is shown in the flowchart. In some cases, the steps shown or described can be executed in an order different from the order in the flowchart. The terms "first", "second", etc. in the specification, claims, and the above accompanying drawings are defined to distinguish similar objects, and do not have to be used to describe a specific order or sequence.

At present, advanced artificial intelligence algorithms such as deep learning can be used to extract a spatial correlation of wireless channels, and then directly infer quality information of all beams through less beam quality information and predict optimal beams, thereby significantly reducing beam training and measurement expenses. However, both base station beams and terminal beams in an existing standard agreement are based on a dual-transparency design. When an artificial intelligence model is deployed on a terminal side, it is urgent to solve the problems of how a base station performs resource configuration and beam scanning at low cost and how a terminal performs beam measurement and reporting.

In view of this, the present disclosure provides a beam measurement method, a user apparatus, a base station, a computer storage medium, and a computer program product. A beam measurement method of an embodiment includes: transmitting beam recommendation indication information to a first communication device, so that the first communication device to determine a target test beam according to the beam recommendation indication information, wherein the target test beam is configured with a target reference signal resource; receiving the target test beam transmitted by the first communication device; and predicting and obtaining an optimal beam result according to the target reference signal resource, and transmitting optimal beam reporting indication information to the first communication device, wherein the optimal beam reporting indication information corresponds to the optimal beam result. In this embodiment, by transmitting beam recommendation indication information to a first communication device, so that the first communication device to only configure a reference signal resource on a recommended transmitted beam corresponding to the beam recommendation indication information. Namely, the first communication device only needs to configure a reference signal resource on a required target test beam and transmit the target test beam. This is conductive to reducing beam training expenses of the first communication device side. Furthermore, in this case, the required target test beam transmitted by the first communication device can be stably and reliably received, so that an optimal beam result can be obtained by performing beam model measurement according to the target test beam. It is favorable for improving the accuracy of beam measurement, thereby making up for the technical blank in the related method.

This embodiment of the present disclosure will be further elaborated below in conjunction with the accompanying drawings.

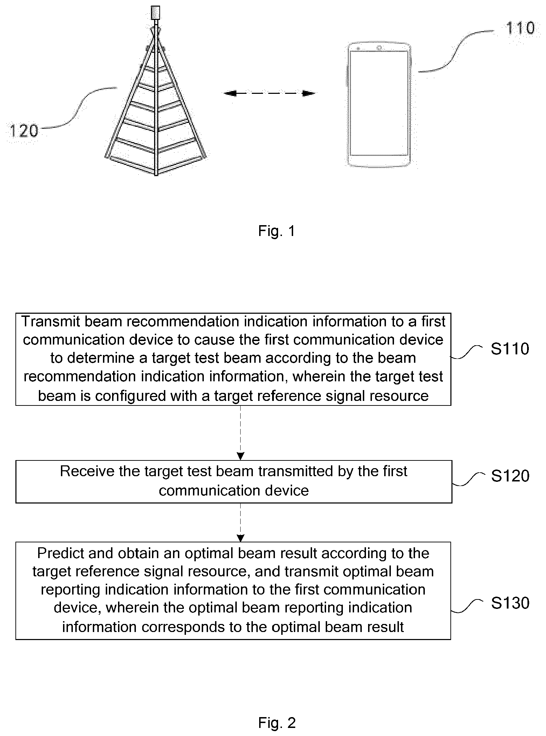

As shown in Fig. 1, Fig. 1 is a schematic diagram of an implementation environment for implementing a beam measurement method according to an embodiment of the present disclosure.

In an example of Fig. 1, the implementation environment includes a user apparatus 110 and a base station 120. The base station 120 and the user apparatus 110 can perform transmission and receiving of wireless signals.

It should be noted that a relative position between the base station 120 and the user apparatus 110 can be set correspondingly in a specific application scenario. For example, the user apparatus 110 can move along a radiation sphere formed by the base station 120 when the base station radiates signals to the outside. Namely, if there are a plurality of sets of user apparatus 110, and different sets of user apparatus 110 are arranged in the above way, the user apparatus 110 can receive wireless signals transmitted by the base station 120 at different spatial positions. It is worth noting that the spatial positions here may be different geographical conditions.

In an embodiment, the user apparatus 110 may be referred to as an access terminal, a User Equipment (UE), a user unit, a user station, a mobile station, a mobile station, a remote station, a remote terminal, a mobile device, a user terminal, a wireless communication device, a user agent, or a user apparatus. For example, the user apparatus 110 may be a cellular phone, a cordless phone, a Session Initiation Protocol (SIP) phone, a Wireless Local Loop (WLL) station, a Personal Digital Assistant (PDA), a handheld device with a wireless communication capability, a computing device or other processing device connected to a wireless modem, a vehicle-mounted device, a wearable device, a terminal device in a 5G network or a future network above 5G, and the like. This embodiment does not specifically limit this.

In an embodiment, the implementation environment for performing a beam measurement method can be applied to an architecture of a 3rd Generation Partnership Project (3GPP) organization. The 3GPP organization has made a complete set of beam management procedure to adjust a direction of high-frequency-band beams and maintain a proper pair of transmitted and received beams, including beam scanning, beam measurement, beam reporting, beam indication, and the like. For example, in a transmitted beam scanning process, the base station 120 transmits beams at a group of predetermined interval and direction. The user apparatus 110 measures a reference signal resource carried on a transmitted beam and reports beam quality information to the base station 120. Finally, the base station 120 determines an optimal beam and establishes a directional communication link. Specifically, the base station configures one or more reference signal resource settings for each set of user apparatus 110 in a channel state information instance (CSI ResourceConfig), and configures one or more CSI reporting settings for each user apparatus 110 in the a higher-level parameter CSI ReportConfig. The CSI ResourceConfig configures reference signal resources for channel measurement or interference measurement, including CSI-Reference Symbol (CSI-RS) resource for channel measurement, a Synchronization Signal and PBCH Block (SSB) resource, and a CSI-IM resource for interference measurement. The CSI-RReportConfig configures parameters related to CSI reporting, including a codebook type, a frequency-domain reporting granularity, a measurement restriction configuration, and a CSI-related feedback quantity, such as a layer indication, a CSI-RS resource indicator (CRI), an SSB resource indicator (SSBRI), physical layer reference signal received power (L1-RSRP), a physical layer signal-to-noise ratio (L1-SINR), and the like. An NR uses the L1-RSRP as a reporting parameter for beam measurement, and reporting of beam-related information is completed in a box fed back by CSI. In beam measurement, the CSI feedback quantity parameter reportQuantity in the CSI reporting setting is configured as "CRI-RSRP" or "SSB-Index-RSRP". At this time, the user apparatus 110 needs to report the reference signal resource indicator CRI/SSBRI and the reference signal received power RSRP. CRI/SSBRI represents an indicator of a CSI-RS resource selected by the user apparatus 110 in a resource set, and RSRP represents quality information of a measured beam. It should be noted that the number of measurement reference signal resources that can be reported in one reporting setting and the number of RSRP that can be reported in one reporting setting depends on the capability of the user apparatus 110, or can be selectively adjusted according to an actual application scenario.

It should be noted that the beams used in the present disclosure are for ease of description only and should not be construed as arbitrary limitations.

A transmitted beam in the present disclosure is used for indicating a transmission mode, and a transmission mode parameter includes at least one of the following:

transmitted beam;

transmitting antenna;

transmitting sector;

precoding of transmitting end;

antenna port;

antenna weight vector;

antenna weight matrix;

transmission mode corresponding to a space division multiplexing mode;

transmission mode corresponding to frequency-domain diversity transmission;

transmission mode corresponding to time-domain diversity transmission;

transmission sequence;

the number of layers for transmission;

transmission mode;

modulation and encoding mode;

reference signal; and

transmission and filtering.

A received beam in this patent is used for indicating a receiving mode, and a receiving mode parameter includes at least one of the following:

receiving beam;

receiving antenna;

receiving antenna panel;

receiving sector; and

receiving and filtering.

The user apparatus 110 at least has functions of transmitting beam recommendation indication information to the base station 120, so that the base station 120 to determine a target test beam according to the beam recommendation indication information, receiving the target test beam transmitted by the base station 120, predicting and obtaining an optimal beam result according to a target reference signal resource, and transmitting optimal beam reporting indication information to the base station 120. The target test beam is configured with the target reference signal resource, and the optimal beam reporting indication information corresponds to the optimal beam result.

The user apparatus 110 further at least has functions of receiving a target test beam transmitted by the base station 120, predicting and obtaining an optimal beam result according to beam indication information carried by the target test beam, and transmitting optimal beam reporting indication information to the base station 120. The target test beam is determined by the base station 120. The beam indication information is used for indicating position information of the target test beam in a beam space. The optimal beam reporting indication information corresponds to the optimal beam result.

The base station 120 at least has functions of performing beam management based on a preset operating logic or performing beam management based on control of an operator. For example, the base station 120 at least has functions of predicting and managing an optimal beam result. Namely, it can determine a target test beam based on the preset operating logic or the control of the operator, and transmit a target test beam to the user apparatus 110, so that the user apparatus 110 to predict and obtain the optimal beam result based on beam indication information carried by the target test beam, and receive optimal beam reporting indication information transmitted by user apparatus 110. Or, the base station 120 can receive beam recommendation indication information transmitted by the user apparatus 110 based on the preset operating logic or the control of the operator, determine a target test beam according to the beam recommendation indication information, transmit the target test beam to the user apparatus 110, so that the user apparatus 110 to predict and obtain an optimal beam result according to a target reference signal resource, and receive optimal beam reporting indication information transmitted by the user apparatus 110. The target test beam is configured with the target reference signal resource; the beam indication information is used for indicating position information of the target test beam in a beam space. The optimal beam reporting indication information corresponds to the optimal beam result. It is worth noting that the base station 120 can be a general mobile communication base station or a MMW AAS base station. It is not specifically limited here.

It should be noted that the above functions of both the base station 120 and the user apparatus 110 can be applied to different application scenarios, and are not limited here.

Those skilled in the art can understand that this implementation environment can be applied to 5G and 6G communication network systems, subsequently evolved mobile communication network systems, and the like. This embodiment does not impose a specific limitation on it.

Those skilled in the art can understand that the implementation environment shown in Fig. 1 does not constitute a limitation on this embodiment of the present disclosure, and may include more or fewer components than those shown in the figure, or combine some components, or arrange different components.

Based on the above implementation environment, various embodiments of a beam measurement method of the present disclosure will be provided below.

As shown in Fig. 2, Fig. 2 is a flowchart of a beam measurement method according to an embodiment of the present disclosure. The beam measurement method can be, but not limited to, applied to a second communication device, for example, the user apparatus 110 in the embodiment shown in Fig. 1. The beam measurement method may include, but not limited to, step S110 to step S130.

Step S110: Beam recommendation indication information is transmitted to a first communication device, so that the first communication device to determine a target test beam according to the beam recommendation indication information. The target test beam is configured with a target reference signal resource.

It should be noted that the second communication device in this embodiment can be, but not limited to, the user apparatus 110 in the embodiment shown in Fig. 1, and the first communication device in this embodiment can be, but not limited to, the base station 120 in the embodiment shown in Fig. 1. Or, those skilled in the art can choose to set a corresponding first communication device or a corresponding second communication device according to an actual application scenario. This embodiment does not impose a limitation on it. To more conveniently describe the application scenarios and principles of the present disclosure, the following relevant embodiments are described by taking the second communication device as the user apparatus and taking the first communication device as the base station, but should not be understood as limiting the embodiments of the present disclosure.

In this step, compared with exhaustive scanning of all beams in a codebook in a related method, transmitting the beam recommendation indication information to the base station, so that the base station to only configure a reference signal resource on a recommended transmitted beam corresponding to the beam recommendation indication information. Namely, the base station only needs to configure a reference signal resource on a required target test beam and transmit the target test beam. This is conductive to reducing beam training expenses of the base station side.

In an embodiment, the beam recommendation indication information includes at least one of the following:

indication information for recommending a reference signal resource index of the target test beam;

indication information for recommending a sampling interval of the target test beam;

indication information for recommending a quantity of the target test beam;

indication information for indicating an index of at least one first test beam group, wherein the first test beam group includes a plurality of the target test beams;

indication information for recommending a beam angle of the target test beam;

indication information for recommending a beam direction of the target test beam;

indication information for recommending a beam width of the target test beam;

indication information for recommending a beam type of the target test beam;

indication information for recommending an angle of arrival or a receiving angle of a transmission channel where the target test beam is located;

indication information for recommending a relative angle for transmitting the target test beam of the first communication device; and

indication information for recommending a relative angle of the target test beam.

A reference signal resource corresponding to the reference signal resource index of the target test beam may be, but is not limited to, a channel state information reference signal resource and a synchronization signal resource. The specific number of the target test beams in the first test beam group can be set according to a specific application scenario, and is not limited here. Transmission channels where different target test beams are located may be different, which means that angles of arrival angle or receiving angles of the transmission channels where the target test beams are located need to be analyzed specifically. Their specific values are not limited here. Specific application scenarios of the various pieces of beam recommendation indication information will be gradually illustrated in the following embodiments, and will not be elaborated here.

In an embodiment, a specific way in which the base station determines the target test beam according to the beam recommendation indication information can be selected and set according to an actual scenario, and is not limited here.

To better illustrate the working principles of all the above embodiments, many specific examples are provided below for explanation.

Example I:

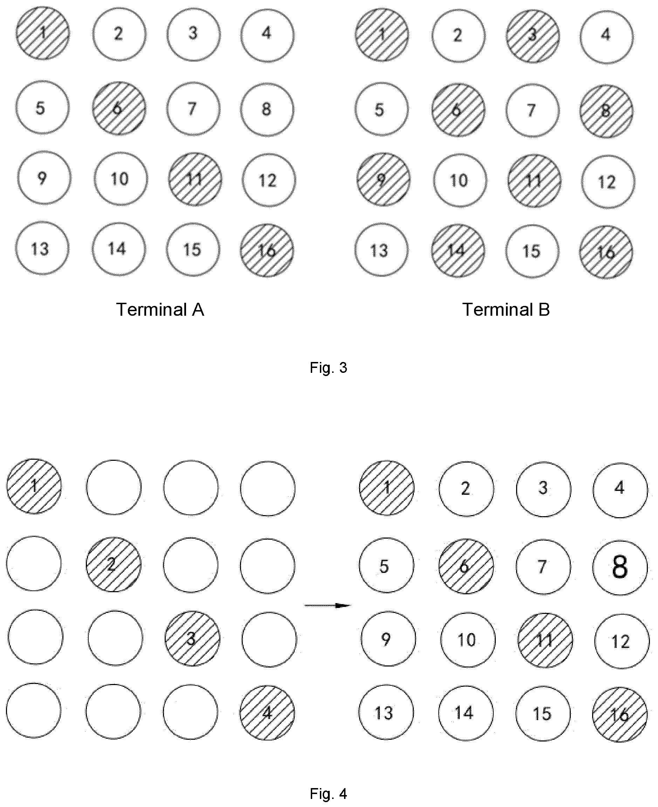

UE reporting indication information of a reference signal resource index for recommending a target test beam is taken as an example. According to specific features of a deployed AI model, a UE reports a plurality of reference signal resource indexes. These indexes represent sampled beams or broad beam positions recommended by the UE. Therefore, a base station only needs to configure reference signal resources on these beam positions subsequently. Fig. 3 is taken as an example. One circle corresponds to one reference signal resource index or a measurement beam. The blank circles represent transmitted beams, and the textured circles represent untransmitted beams. Terminal A uses beam measurement results corresponding to reference signal resource indexes 1, 6, 11, and 16 as model inputs to infer beam quality information at other beam positions. Therefore, terminal A reports reference signal resource indexes 1, 6, 11, and 16 to indicate the base station to only transmit beams at these positions subsequently. Similarly, terminal B reports reference signal resource indexes 1, 3, 6, 8, 9, 11, 14, and 16.

Example II:

UE reporting a beam sampling interval adapted to a deployed AI model is taken as an example. A base station only needs to transmit beams and configure reference signal resources at these sampling intervals subsequently. For example, in Fig. 3, the beam sampling interval reported by terminal A is 4, and the beam sampling interval reported by terminal B is 2.

Example III:

A UE reports a quantity of adapted input and/or output beams according to specific features of a deployed AI model, namely, reports indication information for recommending a quantity of the target test beams. A base station only needs to configure a corresponding quantity of reference signal resources subsequently. For example, in Fig. 3, terminal A reports four model-input beams and 16 model-output beams. Terminal B reports eight model-input beams and 16 model-output beams.

Example IV:

In a case that a base station configures or predefines a plurality of beam groups, a UE reports one or more beam groups or beam group indexes according to a training and inferring results of a deployed AI model, namely, indication information for indicating an index of at least one first test beam group. Each beam group can be used as an input of the AI model. When the UE reports a plurality of beam groups or beam group indexes, the base station can choose to transmit one or more beam groups for corresponding resource configuration according to a scheduling situation.

According to Example I to Example IV, it can be seen that the base station can choose to configure the reference signal resources only on the recommended transmitted beams based on the indication information, reported by the UE, of the recommended transmitted beams, thereby effectively reducing the beam training expenses. Moreover, as the AI model is deployed on the UE side, when the AI model is just online or its inference performance is poor, the UE can actively trigger or activate transmission of a relevant reference signal resource set to provide data required for online fine-tuning or performance monitoring of the AI model.

Step S120: The target test beam transmitted by the first communication device is received.

In this step, since the base station has already determined the target test beam in step S110, the user apparatus can receive the target test beam from the base station in step S120, in order to predict and obtain an optimal beam result according to the target test beam in subsequent steps, and feed back relevant information of the optimal beam result to the base station.

Step S130: An optimal beam result is predicted and obtained according to the target reference signal resource, and optimal beam reporting indication information is transmitted to the first communication device. The optimal beam reporting indication information corresponds to the optimal beam result.

In this step, as the user apparatus can stably and reliably receive the required target test beam transmitted by the base station, the user apparatus can perform beam model measurement according to the target test beam to obtain the optimal beam result. This is conducive to improving the accuracy of beam measurement and making up for the technical gap in the related method.

In an embodiment, the user apparatus can predict the target reference signal resource in various ways, which are not limited here. For example, measurement is performed according to a preset prediction measurement program. When the program detects that the target reference signal resource has been received, the target reference signal resource is measured based on the preset prediction measurement program to obtain the optimal beam result. For another example, an operator sets a sensing apparatus to perceive the received target reference signal resource. When the sensing apparatus prompts that the received target reference signal resource has been perceived, it indicates that the target test beam corresponding to the target reference signal resource has been received, so that the target reference signal resource of the target test beam can be measured to obtain the optimal beam result. For still another example, the target reference signal resource is input to a pre-trained AI model, and an output result of the AI model is obtained as the optimal beam result.

In an embodiment, the optimal beam result can be determined according to a specific scenario, which is not limited here. For example, the optimal beam result can include, but is not limited to, at least one of the following:

at least one optimal beam;

at least one optimal beam pair; and

at least one beam pair adjacent to at least one optimal beam pair.

In an embodiment, the target test beam carries beam indication information. The beam indication information is used for indicating position information of the target test beam in a beam space. There may be one or more beam spaces here which are determined according to an actual application scenario. Namely, if the actual application scenario is different, the position information of the target test beam in the corresponding beam space may be different.

In an embodiment, the beam indication information includes at least one of the following:

index information of at least one second test beam group, wherein the second test beam group includes a plurality of the target test beams;

index information, corresponding to the target test beams, of at least one first target virtual resource in an omnidirectional resource set, wherein the first target virtual resource is not used for being transmitted by the first communication device; and

a control signaling for indicating an activated state of at least one reference signal resource in a pre-configured omnidirectional resource set, wherein the control signaling includes a signaling field corresponding to the reference signal resource; and when a value of the signaling field is a target data, the control signaling indicates that the reference signal resource is in the activated state.

A specific quantity of the target test beams in the second test beam group can be set according to a specific application scenario, and will not be limited here. A beam corresponding to the first target virtual resource is a beam that has not been transmitted to the user apparatus by the base station, but belongs to a useful prediction beam for the user apparatus. Therefore, by transmitting the index information of the at least one first target virtual resource in the omnidirectional resource set corresponding to the target test beam to the base station, the base station can perform configuration on the first target virtual resource and transmit the corresponding test beam to the user apparatus. A specific value of a signaling field in the control signaling is not limited and is only used for representing an activated state or a non-activated state. Specific application scenarios of various pieces of beam indication information will be illustrated and explained step by step in the following embodiments and will not be elaborated here.

In an embodiment, when the beam indication information includes the control signaling for indicating the activated state of the at least one reference signal resource in the pre-configured omnidirectional resource set, the control signaling includes at least one of the following:

a media access control layer control element signaling; and

a downlink control signaling.

The control signaling configured above can effectively represent an activated state of the reference signal resource and has a good indication function.

In an embodiment of the present disclosure, the steps before step S130 "optimal beam reporting indication information is transmitted to the first communication device" is further explained, which may further include but not limited to step 140.

Step S140: Reporting mode indication information is transmitted to the first communication device. The reporting mode indication information is used for indicating a mode for transmitting the optimal beam reporting indication information.

In this step, the determined reporting mode indication information is used for indicating a mode for transmitting the optimal beam reporting indication information. Therefore, transmitting the reporting mode indication information to the base station can prompt the base station of what specific form that the user apparatus uses to transmit the optimal beam reporting indication information, so that it is easier for the base station to distinguish the optimal beam reporting indication information in the specific form and accurately understand an actual situation of the optimal beam result.

In an embodiment, the specific form of the optimal beam reporting indication information can vary in different application scenarios. The following will provide detailed explanations for various embodiments step by step.

Considering that the base station configures reference signal resources in all beam directions in an omnidirectional beam scanning method in the related technology, namely, configures an omnidirectional resource set, the terminal measures the omnidirectional resource set and then selects one or more optimal beams for reporting. In an AI-based beam scanning method, the terminal can only receive and measure some sampled beams or broad beams, and based on an AI inference result, predict full beam space information and report optimal beams. A possible problem is that the optimal beams inferred by AI are untransmitted beams, so that the UE needs to indicate the optimal beams during beam reporting, to inform the base station of content of the optimal beams. Based on this, the UE transmits the first beam reporting indication information corresponding to this case to the UE. When the optimal beam reporting indication information includes the first beam reporting indication information, the first beam reporting indication information includes at least one of the following:

index information of the optimal beam result;

offset information of the optimal beam result relative to at least one first beam, wherein the first beam is a beam that has not been received from the first communication device, namely, the base station does not understand relevant information of the first beam, so that the first beam needs to be reported;

prediction-associated parameter information of a pre-configured prediction model, wherein the prediction model is used for predicting and obtaining the optimal beam result, and the prediction model may be set according to a specific scenario, such as an AI model and a deep network model, which is not limited here; and

beam feature information of the optimal beam result.

In an embodiment, the index information of the optimal beam result includes at least one of the following:

index information of at least one second target virtual resource, corresponding to the optimal beam result, in an omnidirectional resource set, wherein the second target virtual resource is not used for being transmitted by the first communication device; and

a channel state information reference signal resource set and reference signal received power of the optimal beam result.

Since a beam corresponding to the second target virtual resource is a beam that has not been transmitted to the user apparatus by the base station, but belongs to the predicted and obtained optimal beam result, by transmitting the index information of the at least one second target virtual resource, corresponding to the optimal beam result, in the omnidirectional resource set to the base station, the base station can understand the optimal beam result corresponding to the second target virtual resource.

In an embodiment, the offset information of the optimal beam result relative to the at least one first beam includes at least one of the following:

index offset information of the optimal beam result relative to the at least one first beam;

direction offset information of the optimal beam result relative to the at least one first beam;

angle offset information of the optimal beam result relative to the at least one first beam; and position offset information of the optimal beam result relative to the at least one first beam.

By reporting an offset of the optimal beam result relative to the at least one first beam, the base station can understand a relative relationship between the optimal beam result and the first beam.

In an embodiment, the prediction-associated parameter information includes at least one of the following:

output vector information; and

matrix index information.

The output vector information or the matrix index information can be parameter information corresponding to a prediction model used by the user apparatus. In a specific application scenario, the output vector information or the matrix index information can be used as other corresponding parameter information, which will not be limited here.

In an embodiment, the beam feature information of the optimal beam result includes at least one of the following:

beam direction information of the optimal beam result;

beam angle information of the optimal beam result;

beam angle range information of the optimal beam result;

beam width information of the optimal beam result;

beam type information of the optimal beam result; and

position information of adjacent transmitted beams of the optimal beam result.

To better illustrate the working principles of all the above embodiments, many specific examples are provided below for explanation.

Example V:

UE reporting a virtual resource set index or a virtual resource index corresponding to an optimal beam result is taken as an example. Since a base station only configures reference signal resources on some sampled beams or broad beams, in an AI-based beam reporting method, a UE measures a transmitted beam and infers the optimal beam result through a deployed AI model. Then, a mapping relationship between the configured resource set and an omnidirectional resource set can be established through the virtual resource set index or virtual resource index, to achieve reporting indication to the base station. Specifically, the UE can use two reporting modes: 1) a traditional reporting mode, which reports a reference signal resource index and a beam measurement result; 2) an AI-model-based reporting mode, which reports the virtual resource set index or virtual resource index and predicted beam quality information. In addition, the UE can use an additional bit to indicate whether the reporting mode used is the traditional reporting mode or the AI-model-based reporting mode. The virtual resource set index or virtual resource index is used for indicating an index or position of the reported resource/beam index in the omnidirectional resource set. The term "virtual" represents that this omnidirectional resource set or resource has not actually been transmitted.

For example, referring to Fig. 4, one circle corresponds to one reference signal resource index or one measurement beam. The blank circles represent transmitted beams, and the textured circles represent untransmitted beams. Reference signal resource indexes configured by the base station are from 1 to 4, but a virtual reference signal resource index that is predicted by the UE through the AI model and corresponds to an optimal beam is 8. Therefore, the UE reports the reference signal resource index of 8 and the corresponding beam quality information.

Example VI:

UE reporting an additional offset is taken as an example. In the AI-based beam reporting mode, a UE reports one or more reference signal resource indexes in a configured resource set, beam quality information obtained through measurement or AI prediction, and an offset. The offset implies a mapping relationship between the configured resource set and an omnidirectional resource set. When the offset is not configured, it represents that the UE uses the traditional reporting mode. When the offset is configured, it represents that the UE uses the AI-based reporting mode. The offset is used for indicating an offset between an actual optimal beam and a reported beam, such as an index offset, a direction offset, an angle offset, and position offset. One feasible method is as follows: Assuming that a quantity of reference signal resources included in the resource set configured by the base station and a quantity of reference signal resources included in the omnidirectional resource set for omnidirectional beam scanning are M and N, respectively, it means that a length of the additional bit representing the offset is $\left\lceil \log_2 \left\lceil \frac{N}{M} \right\rceil \right\rceil$ , or if a beam sampling interval reported by the UE or selected by the base station is K, a length of the additional bit is $[\log_2 K]$.

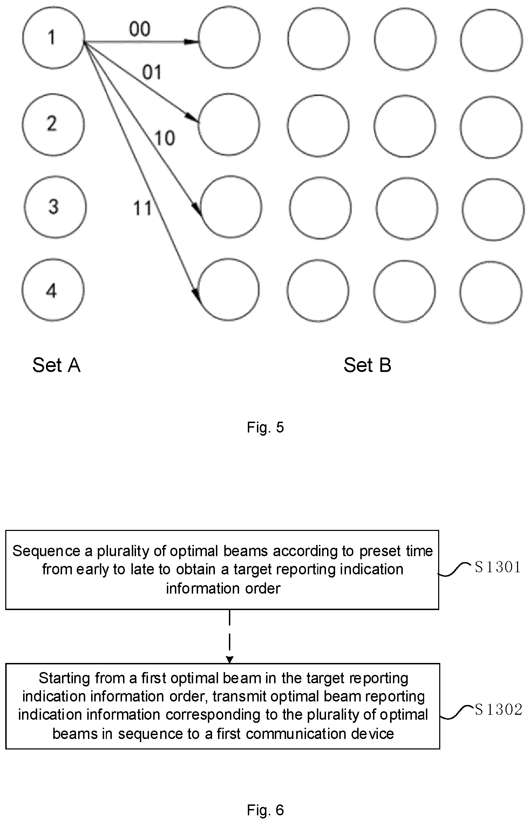

As shown in Fig. 5, one circle corresponds to one reference signal resource index or one measurement beam. The blank circles represent transmitted beams, and the textured circles represent untransmitted beams. Reference signal resource indexes carried by broad beams configured by the base station are from 1 to 4. Assuming that a broad beam can be refined into four narrow beams, namely, if reference signal resources carried by one broad beam and four narrow beams are configured as QCL type D, the base station only needs to configure and transmit a broad beam set A. The UE infers beam quality information of the narrow beams (i.e. an omnidirectional resource set B) based on a deployed AI model, and reports a broad beam index corresponding to an optimal narrow beam, beam quality information predicted by AI, and an offset. The offset can be 00, 01, 10, or 11, representing a specific position of the narrow beam, satisfying a quasi co-location relationship, of the reported broad beam.

Example VII:

UE reporting an output vector or/and a matrix index of an AI model is taken as an example. If an AI model deployed on a UE side is non-transparent to a base station, for example, if the base station knows an AI model input, an AI model output, or a model parameter to an extent, the UE can directly report relevant information of the AI model output, such as values or indexes corresponding to some elements in a model output vector or a model output matrix. Based on the relevant information of the AI model output reported by the UE, the base station can determine the specific position of the reported optimal beam result.

Example VIII:

UE reporting additional beam description information is taken as an example. Since a base station only configures or transmits reference signal resources on some sampled beams or broad beams, if an optimal beam inferred by an AI model on a UE side is a beam that has not been transmitted by a base station, the UE cannot report a corresponding reference signal resource index and beam measurement result according to the traditional reporting mode. At this time, in the AI-based beam reporting mode, the UE reports additional beam description information and corresponding beam quality information to indicate the position and beam quality of the optimal beam result reported by the base station. The beam description information includes at least one of the following: a beam direction, a beam angle, a beam angle range, a beam width, a beam type, position information between two transmitted beams, and the like.

According to Examples V to VIII, it can be seen that based on the first beam reporting indication information reported by the UE, the base station can reliably determine the specific position of the optimal beam reported by the UE.

In an embodiment, considering a binding relationship between the reference signal resource index (CRI)/synchronization signal block index (SSBRI) reported by the user apparatus and its beam quality information, namely, each CRI/SSBRI among reporting parameters corresponds to one piece of beam quality information, in order to adapt to the AI-based beam reporting mode, the binding relationship between the CRI/SSBRI and the beam quality information is released during beam reporting, namely, the quantity of the reference signal resource indexes needing to be reported by the user apparatus and the quantity of pieces of the beam quality information needing to be reported by the user apparatus are flexibly indicated according to the capability and system load of the UE, and the reference signal resource indexes and the corresponding beam quality information are reported respectively in sequence according to a mapping rule of a Channel State Information (CSI) domain. In addition, for each beam needing to be reported, the user apparatus can report corresponding time information. Namely, when the optimal beam reporting indication information includes second beam reporting indication information, the second beam reporting indication information includes at least one of the following:

index information and beam quality information of a reference signal resource corresponding to the optimal beam result;

index information of a reference signal resource corresponding to the optimal beam result;

index information and beam quality information of reference signal resources corresponding to one part of optimal beams in the optimal beam result, and index information of reference signal resources corresponding to another part of optimal beams in the optimal beam result; and

index information, beam quality information, and slot information of a reference signal resource corresponding to the optimal beam result.

In an embodiment, the index information of the reference signal resource corresponding to the optimal beam result includes at least one of the following:

measured index information of the reference signal resource corresponding to the optimal beam result;

index information, obtained based on a pre-configured prediction model, of the reference signal resource corresponding to the optimal beam result; and

index information of a reference signal resource corresponding to an input beam of the pre-configured prediction model, wherein the prediction model is used for predicting and obtaining the optimal beam result.

Namely, a specific form of index information of the reference signal resource corresponding to the optimal beam result transmitted by the user apparatus can be determined according to different application scenarios. For example, the index information can be obtained through self-measurement, or based on a prediction models, or index information of a reference signal resource corresponding to an input beam of a prediction model.

In an embodiment, the slot information includes at least one of the following:

slot offset information;

slot sequence information;

slot application information;

slot position information; and

slot persistence information.

The user apparatus transmits the time slot information to notify the base station of a time sequence for transmission of the optimal beam result, so that the base station to better subsequently arrange or process the optimal beam result, which is beneficial for improving the overall control effect.

As shown in Fig. 6, in an embodiment of the present disclosure, when the optimal beam result includes a plurality of optimal beams, step S130 "optimal beam reporting indication information is transmitted to the first communication device" will be further explained, which may include, but not limited to step S1301 to step S1302.

Step S1301: The plurality of optimal beams are sequenced according to preset time from early to late to obtain a target reporting indication information order.

Step S1302: Starting from a first optimal beam in the target reporting indication information order, the optimal beam reporting indication information corresponding to the plurality of optimal beams are transmitted in sequence to the first communication device.

In this step, by sequencing the plurality of optimal beams according to respective transmission time of the optimal beams to obtain the target reporting indication information sequence, transmission time sequences of the various optimal beams can be determined. Therefore, the optimal beam reporting indication information corresponding to the various optimal beams can be transmitted in sequence according to the target reporting indication information sequence, achieving time-staggered transmission. This allows the base station to receive the optimal beam reporting indication information more intuitively and reliably, avoiding situations such as inaccurate or difficult reception by the base station. Meanwhile, marking the time further facilitates subsequent correction in case of possible errors.

In an embodiment, there may be various applicable scenarios for the optimal beams, which can be determined according to a specific application situation and are not limited here. For example, one optimal beam can be, but is not limited to, an optimal beam to be transmitted in a current situation. For another example, the optimal beams may be optimal beams predicted by the user apparatus at multiple future time points, namely, the optimal beams are beams that have not been transmitted before.

In order to better explain the working principles of the above embodiments, specific examples are provided below for explanation.

Example IX:

In a reporting process, a UE reports one or more pieces of CRI and corresponding beam quality information. The reported CRI at least includes one of the following: CRI corresponding to an optimal beam measured by the UE, CRI corresponding to an optimal beam inferred by an AI model, CRI corresponding to an input beam used by AI inference.

In another reporting process, a UE only reports CRI corresponding to a selected beam. For example, if an AI model deployed on the UE side can only predict an optimal beam index, the UE can only report CRI corresponding to an optimal beam and does not need to report its corresponding beam quality information.

In still another reporting process, a UE reports corresponding CRI and beam quality information for one part of beams that need to be reported, and only reports corresponding CRI for another part of the beams that need to be reported. For example, the UE reports beam groups including a plurality of beams for one or more different beam regions respectively. In each beam group, the UE only reports the quality information of one beam to indicate the approximate beam quality of the beam group, and reports the corresponding CRI of other beams.

In yet still another reporting process, the UE reports one or more pieces of reference signal resource index (CRI), beam quality information, and corresponding time information. For example, the UE can directly predict optimal transmitted beams at multiple future time points according to a deployed AI model, and, therefore, can report CRI corresponding to one or more optimal beams at the multiple future time points, beam quality information, and corresponding time information. The time information here can include a slot offset, a sequence, application time, a slot where the beam is located, a duration, and the like. It is not limited here.

According to Example IX, it can be seen that transmitting the second beam reporting indication information can effectively solve the problem of low flexibility in resource configuration and beam reporting in an existing agreement.

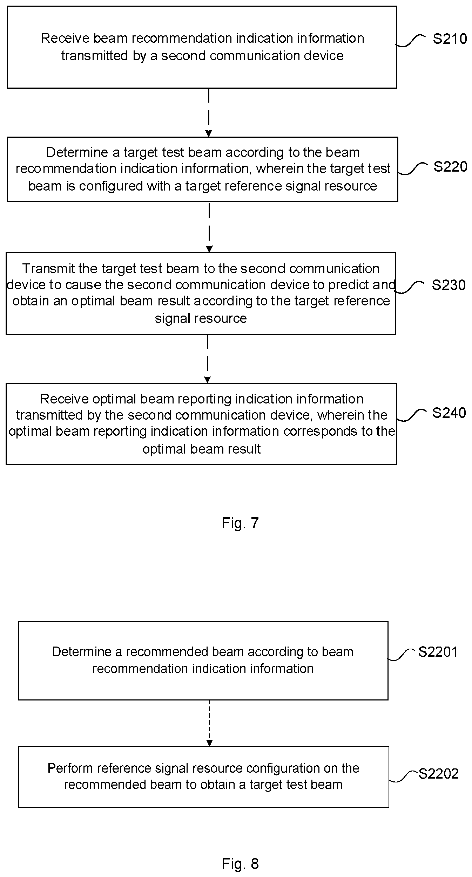

As shown in Fig. 7, Fig. 7 is a flowchart of a beam measurement method according to an embodiment of the present disclosure. The beam measurement method can be, but not limited to, applied to a first communication device, for example, the base station 120 in the embodiment shown in Fig. 1. The beam measurement method may include, but not limited to, step S210 to step S240.

Step S210: Beam recommendation indication information transmitted by a second communication device is received.

Step S220: A target test beam is determined according to the beam recommendation indication information. The target test beam is configured with a target reference signal resource.

Step S230: The target test beam is transmitted to the second communication device, so that the second communication device to predict and obtain an optimal beam result according to the target reference signal resource.

Step S240: Optimal beam reporting indication information transmitted by the second communication device is received. The optimal beam reporting indication information corresponds to the optimal beam result.

It should be noted that the first communication device in this embodiment can be, but not limited to, the base station 120 in the embodiment shown in Fig. 1, and the second communication device in this embodiment can be, but not limited to, the user apparatus 110 in the embodiment shown in Fig. 1. Or, those skilled in the art can choose to set a corresponding first communication device or a corresponding second communication device according to an actual application scenario. This embodiment does not impose a limitation on it. To more conveniently describe the application scenarios and principles of the present disclosure, the following relevant embodiments are described by taking the first communication device as the base station and taking the second communication device as the user apparatus, but should not be understood as limiting the embodiments of the present disclosure.

In this step, by receiving beam recommendation indication information transmitted by the user apparatus, a reference signal resource only needs to be configured on a recommended transmitted beam corresponding to the beam recommendation indication information. Namely, the first communication device only needs to configure a reference signal resource on a required target test beam and transmit the target test beam. This is conductive to reducing beam training expenses of the base station side. Furthermore, in this case, the user apparatus can stably and reliably receive the required target test beam, so that an optimal beam result can be obtained by performing beam model measurement according to the target test beam. It is favorable for improving the accuracy of beam measurement, thereby making up for the technical blank in the related method.

As shown in Fig. 8, in an embodiment of the present disclosure, step S220 is further explained. Step S220 can include, but not limited to, step S2201 to S2202.

Step S2201: A recommended beam is determined according to the beam recommendation indication information.

Step S2202: Reference signal resource configuration is performed on the recommended beam to obtain the target test beam.

In this step, the recommended beam corresponding to the beam recommendation indication information is determined according to the beam recommendation indication information, so that the reference signal resource configuration can be performed on the recommended beam to obtain the required target test beam.

In an embodiment of the present disclosure, step S2202 is further explained. Step S2202 can include, but not limited to, one of the following:

The target reference signal resource is configured for the recommended beam; and

the target reference signal resource is searched for from a pre-configured omnidirectional resource set for the recommended beam, and the target reference signal resource is activated. The omnidirectional resource set includes reference signal resources configured on all beams in a beam space.

Namely, the target reference signal resource can be directly configured for the recommended beam, or the target reference signal resource can be indirectly activated to be configured from the pre-configured omnidirectional resource set, or can be specifically selected according to an actual scenario. It is not limited here.

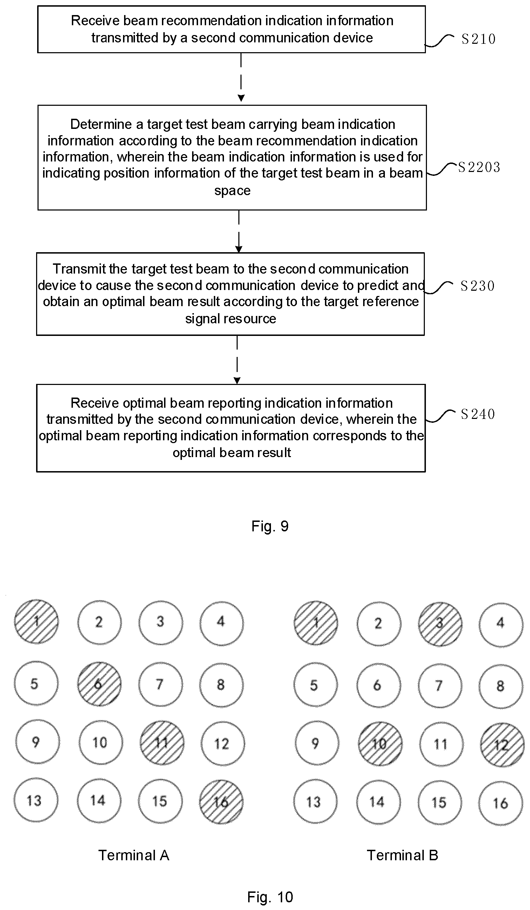

As shown in Fig. 9, in an embodiment of the present disclosure, step S220 is further explained. Step S220 can include, but not limited to, step S2203.

Step S2203: The target test beam carrying beam indication information is determined according to the beam recommendation indication information. The beam indication information is used for indicating position information of the target test beam in a beam space.

In this step, since the target test beam carrying the beam indication information is determined, the target test beam is transmitted to the user apparatus, so that the user apparatus to obtain the beam indication information, so that the user apparatus can clarify a specific position, in the beam space, of the target test beam transmitted by the base station, and input the corresponding beam to a prediction model. This is conducive to improving the prediction accuracy of the prediction model.

It should be noted that, step S210 to step S240, step S2201 to step S2202, and step S2203 in the above embodiment belong to the same inventive concept as that of the relevant embodiment of the foregoing beam measurement method, except that their executive bodies are different, namely, except that the executive body of the foregoing beam measurement method is the second communication device and the executive body of step S210 to step S240, step S2201 to step S2202, and step S2203 in the above embodiment is the first communication device. Therefore, other specific implementations of step S210 to step S240, step S2201 to step S2202, and step S2203 in the above embodiment, and related implementations such as the beam recommendation indication information, the beam indication information, the first beam reporting indication information, the second beam reporting indication information, and other specific implementations can be found in the specific embodiment of the beam measurement method in the foregoing embodiment. To avoid redundancy, the implementations of this part will not be elaborated here.

To better illustrate the working principles of all the above embodiments, many specific examples are provided below for explanation.

Example X:

Carrying beam group indexes is taken as an example. If a base station or a UE reports or predefines a plurality of beam groups, the base station can carry the corresponding beam group indexes during configuration of reference signal resources, to indicate specific positions of corresponding transmitted beams in a beam space.

Example XI:

Carrying a virtual resource set index or virtual resource index is taken as an example. In an omnidirectional beam scanning method of the related technology, a base station needs to configure reference signal resources in all beam directions, namely, to configure an omnidirectional resource set. However, in an AI-based beam scanning method, the base station only needs to configure reference signal resources in some beam directions, and carry a virtual resource set index or a virtual resource index to indicate indexes or positions of the configured reference signal resources in the omnidirectional resource set. The term "virtual" represents that this omnidirectional resource set or resource has not actually been transmitted. For example, referring to Fig. 10, one circle corresponds to one reference signal resource index or one measurement beam. The blank circles represent transmitted beams, and the textured circles represent untransmitted beams. For different terminals A and B, when the base station configures reference signal resources for terminal A, additional information needing to be carried is 1, 6, 11, and 16; and when the base station configures reference signal resources for terminal B, additional information needing to be carried is 1, 3, 10, and 12.

Example XII:

Carrying a media access control layer control element signaling or a downlink control signaling for resource activation is taken as an example. In the AI-based beam scanning method, a base station only needs to transmit one part of beams. Therefore, after configuring an omnidirectional resource set, the base station uses an additional media access control layer control element signaling or an additional downlink control signaling to indicate an activated/deactivated state of each reference signal resource in the resource set. Namely, activation/deactivation is defined to be performed at a resource level. Specifically, the carried media access control layer control element signaling or the downlink control signaling includes index IDs of all or some of the reference signal resources in the omnidirectional beamforming set and corresponding activated/deactivated states of the reference signal resources. For example, when a value of a relevant signaling field is 1, it indicates that the corresponding reference signal resource is activated, otherwise, it indicates that the corresponding reference signal resource is deactivated.

According to Examples X to XII, it can be seen that through the beam indication information transmitted by the base station, the UE can clarify the indexes or specific positions, in the beam space, of the beams transmitted by the base station, so that measurement results of the corresponding beams can be input to the AI model for measurement, which is conducive to improving the accuracy of model inference.

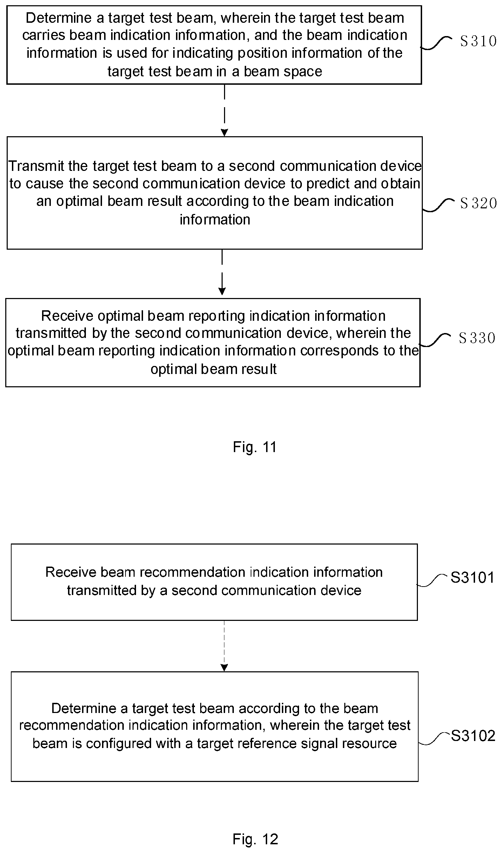

As shown in Fig. 11, Fig. 11 is a flowchart of a beam measurement method according to an embodiment of the present disclosure. The beam measurement method can be, but not limited to, applied to a first communication device, for example, the base station 120 in the embodiment shown in Fig. 1. The beam measurement method may include, but not limited to, step S310 to step S330.

Step S310: A target test beam is determined. The target test beam carries beam indication information, and the beam indication information is used for indicating position information of the target test beam in a beam space.

Step S320: The target test beam is transmitted to a second communication device, so that the second communication device to predict and obtain an optimal beam result according to the beam indication information.

Step S330: Optimal beam reporting indication information transmitted by the second communication device is received. The optimal beam reporting indication information corresponds to the optimal beam result.

It should be noted that the first communication device in this embodiment can be, but not limited to, the base station 120 in the embodiment shown in Fig. 1, and the second communication device in this embodiment can be, but not limited to, the user apparatus 110 in the embodiment shown in Fig. 1. Or, those skilled in the art can choose to set a corresponding first communication device or a corresponding second communication device according to an actual application scenario. This embodiment does not impose a limitation on it. To more conveniently describe the application scenarios and principles of the present disclosure, the following relevant embodiments are described by taking the first communication device as the base station and taking the second communication device as the user apparatus, but should not be understood as limiting the embodiments of the present disclosure.

In this step, by determining the target test beam carrying the beam indication information and transmitting the target test beam to the user apparatus, the user apparatus can stably and reliably receive the required target test beam to clarify the specific position, in the beam space, of the target test beam transmitted by the base station, so that a measurement result of the corresponding target test beam can be input to a prediction model for measurement and prediction to obtain the optimal beam result. This is conducive to improving the accuracy of model inference and making up for the technical gap in the related method.

As shown in Fig. 12, in an embodiment of the present disclosure, step S310 is further explained. Step S310 can include, but not limited to, step S3101 to S3102.

Step S3101: Beam recommendation indication information transmitted by a second communication device is received.

Step S3102: A target test beam is determined according to the beam recommendation indication information. The target test beam is configured with a target reference signal resource.

In this step, compared with exhaustive scanning of all beams in a codebook in a related method, receiving the beam recommendation indication information transmitted by the user apparatus, a reference signal resource only needs to be configured on a recommended transmitted beam corresponding to the beam recommendation indication information. Namely, the reference signal resource only needs to be configured on the required target test beam. This is conductive to reducing beam training expenses of the base station side.

In one embodiment, step S3102 may include, but not limited to: A recommended beam is determined according to the beam recommendation indication information; and reference signal resource configuration is performed on the recommended beam to obtain the target test beam. Namely, the recommended beam corresponding to the beam recommendation indication information is determined according to the beam recommendation indication information, so that the reference signal resource configuration can be performed on the recommended beam to obtain the required target test beam.

Reference signal resource configuration is performed on the recommended beam, which may include, but not limited to: The target reference signal resource is configured for the recommended beam, or the target reference signal resource is searched for from a pre-configured omnidirectional resource set for the recommended beam, and the target reference signal resource is activated. The omnidirectional resource set includes reference signal resources configured on all beams in a beam space.

It should be noted that, step S310 to step S330 and step S3101 to step S3102 in the above embodiment belong to the same inventive concept as that of the relevant embodiment of the foregoing beam measurement method. Therefore, other specific implementations of step S310 to step S330 and step S3101 to step S3102 in the above embodiment, and related implementations such as the beam recommendation indication information, the beam indication information, the first beam reporting indication information, the second beam reporting indication information, and other specific implementations can be found in the specific embodiment of the beam measurement method in the foregoing embodiment. To avoid redundancy, the implementations of this part will not be elaborated here.

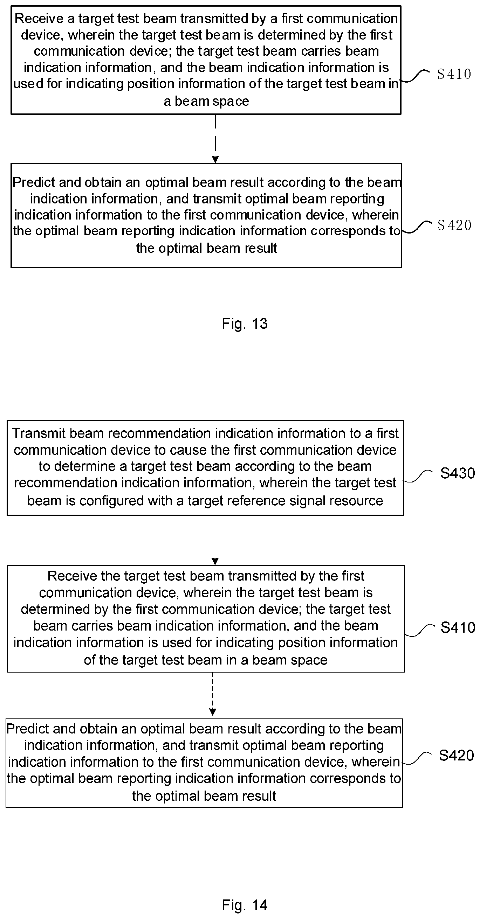

As shown in Fig. 13, Fig. 13 is a flowchart of a beam measurement method according to another embodiment of the present disclosure. The beam measurement method can be, but not limited to, applied to a second communication device, for example, the user apparatus 110 in the embodiment shown in Fig. 1. The beam measurement method may include, but not limited to, step S410 to step S420.

Step S410: A target test beam transmitted by a first communication device is received. The target test beam is determined by the first communication device; the target test beam carries beam indication information, and the beam indication information is used for indicating position information of the target test beam in a beam space.

Step S420: An optimal beam result is predicted and obtained according to the beam indication information, and optimal beam reporting indication information is transmitted to the first communication device. The optimal beam reporting indication information corresponds to the optimal beam result.

It should be noted that the second communication device in this embodiment can be, but not limited to, the user apparatus 110 in the embodiment shown in Fig. 1, and the first communication device in this embodiment can be, but not limited to, the base station 120 in the embodiment shown in Fig. 1. Or, those skilled in the art can choose to set a corresponding first communication device or a corresponding second communication device according to an actual application scenario. This embodiment does not impose a limitation on it. To more conveniently describe the application scenarios and principles of the present disclosure, the following relevant embodiments are described by taking the second communication device as the user apparatus and taking the first communication device as the base station, but should not be understood as limiting the embodiments of the present disclosure.

In this step, by receiving the required target test beam transmitted by the first communication device, the specific position, in the beam space, of the target test beam transmitted by the base station can be clarified, so that it is convenient to input a measurement result of the corresponding target test beam to a prediction model for measurement and prediction to obtain the optimal beam result. This is conducive to improving the accuracy of model inference and making up for the technical gap in the related method.

As shown in Fig. 14, in an embodiment of the present disclosure, steps before step S410 will be further explained. Before step S410, the method may include, but not limited to, step S430.

Step S430: Beam recommendation indication information is transmitted to a first communication device, so that the first communication device to determine a target test beam according to the beam recommendation indication information. The target test beam is configured with a target reference signal resource.

In this step, compared with exhaustive scanning of all beams in a codebook in a related method, transmitting the beam recommendation indication information to the base station, so that the base station to only configure a reference signal resource on a recommended transmitted beam corresponding to the beam recommendation indication information. Namely, the base station only needs to configure a reference signal resource on a required target test beam. This is conductive to reducing beam training expenses of the base station side.

It should be noted that step S410 to step S420 and step S430 in the above embodiment belong to the same inventive concept as that of the relevant embodiment of the foregoing beam measurement method. Therefore, other specific implementations of step S410 to step S420 and step S430 in the above embodiment, and related implementations such as the beam recommendation indication information, the beam indication information, the first beam reporting indication information, the second beam reporting indication information, and other specific implementations can be found in the specific embodiment of the beam measurement method in the foregoing embodiment. To avoid redundancy, the implementations of this part will not be elaborated here.

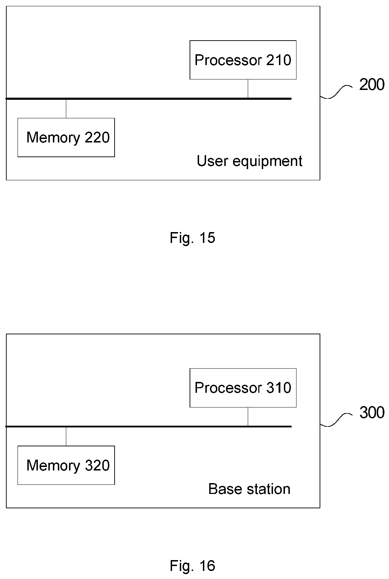

In addition, as shown in Fig. 15, an embodiment of the present disclosure further discloses a user apparatus 200, including: at least one processor 210; and at least one memory 220, configured to store at least one program. The at least one program, when executed by the at least one processor 210, implements step S110 to step S130, step S140, step S1301 to step S1302, step S410 to step S420, or step S430 of the beam measurement methods in the foregoing embodiments.

In addition, as shown in Fig. 16, an embodiment of the present disclosure further discloses a base station 300, including: at least one processor 310; and at least one memory 320, configured to store at least one program. The at least one program, when executed by the at least one processor 310, implements step S210 to step S240, step S2201 to step S2202, step S2203, step S310 to step S330, or step S3101 to step S3102 of the beam measurement methods in any of the foregoing embodiments.

In addition, an embodiment of the present disclosure further discloses a computer-readable storage medium, having computer-executable instructions stored thereon. The computer-executable instructions are used for performing the beam measurement methods in any of the foregoing embodiments.

In addition, an embodiment of the present disclosure further discloses a computer program product, including computer programs or computer instructions. The computer programs or the computer instructions are stored in a computer-readable storage medium. A processor of a computer device reads the computer programs or computer instructions from the computer-readable storage medium. The processor executes the computer programs or computer instructions, so that the computer device to perform the beam measurement methods in any of the foregoing embodiments.

A person of ordinary skill in the art can understand that all or some steps and systems in the disclosed method mentioned above can be implemented as software, firmware, hardware, and their appropriate combinations. Some or all physical components can be implemented as software executed by a processor, such as a central processing unit, a digital signal processor, or a microprocessor, or as hardware, or as integrated circuits, such as dedicated integrated circuits. Such software can be distributed on a computer-readable medium. The computer-readable medium may include a computer storage medium (or non-transient medium) and a communication medium (or transient medium). As known to a person of ordinary skill in the art, the term, computer storage medium, includes volatile and non-volatile media, and removable and non-removable media implemented by using any method or technology used for storing information (such as computer-readable instructions, data structures, program modules, or other data). The computer storage media include but are not limited to a random access memory (RAM), a read only memory (ROM), an electrically erasable programmable read only memory (EEPROM), a flash memory or other storage technologies, a CD-ROM, a digital versatile disc (DVD) or other optical disc storages, a cassette, a magnetic tape, a disk storage or other magnetic storage devices, or any other media that can be used for storing desired information and can be accessed by computers. In addition, it is well known to a person of ordinary skill in the art that the communication media typically include computer-readable instructions, data structures, program modules, or other data in modulated data signals such as carriers or other transmission mechanisms, and may include any information delivery medium.

The above is a specific explanation of several implementations of the present disclosure, but the present disclosure is not limited to the above implementations. Those skilled in the art can also make various equivalent transformations or replacements without departing from the scope of the present disclosure. These equivalent transformations or replacements shall all fall within the scope of the claims of the present disclosure.

**Claims**

1. A beam measurement method, comprising:

   transmitting beam recommendation indication information to a first communication device, so that the first communication device determines a target test beam according to the beam recommendation indication information, wherein the target test beam is configured with a target reference signal resource;
   receiving the target test beam transmitted by the first communication device; and
   predicting and obtaining an optimal beam result according to the target reference signal resource, and transmitting optimal beam reporting indication information to the first communication device, wherein the optimal beam reporting indication information corresponds to the optimal beam result.

2. The beam measurement method according to claim 1, wherein the beam recommendation indication information comprises at least one of the following:

   indication information for recommending a reference signal resource index of the target test beam;
   indication information for recommending a sampling interval of the target test beam;
   indication information for recommending a quantity of the target test beam;
   indication information for indicating an index of at least one first test beam group, wherein the first test beam group comprises a plurality of the target test beams;
   indication information for recommending a beam angle of the target test beam;
   indication information for recommending a beam direction of the target test beam;
   indication information for recommending a beam width of the target test beam;
   indication information for recommending a beam type of the target test beam;
   indication information for recommending an angle of arrival or a receiving angle of a transmission channel where the target test beam is located;
   indication information for recommending a relative angle for transmitting the target test beam of the first communication device; and
   indication information for recommending a relative angle of the target test beam.

3. The beam measurement method according to claim 1, wherein the target test beam carries beam indication information; and the beam indication information is used for indicating position information of the target test beam in a beam space.

4. The beam measurement method according to claim 3, wherein the beam indication information comprises at least one of the following:

   index information of at least one second test beam group, wherein the second test beam group comprises a plurality of the target test beams;
   index information of at least one first target virtual resource, corresponding to the target test beams, in an omnidirectional resource set, wherein the first target virtual resource is not used for being transmitted by the first communication device; and
   a control signaling for indicating an activated state of at least one reference signal resource in a pre-configured omnidirectional resource set, wherein the control signaling comprises a signaling field corresponding to the reference signal resource; and when a value of the signaling field is a target data, the control signaling indicates that the reference signal resource is in the activated state.

5. The beam measurement method according to claim 4, wherein when the beam indication information comprises the control signaling for indicating the activated state of the at least one reference signal resource in the pre-configured omnidirectional resource set, the control signaling comprises at least one of the following:

   a media access control layer control element signaling; and
   a downlink control signaling.

6. The beam measurement method according to claim 1, wherein when the optimal beam reporting indication information comprises first beam reporting indication information, the first beam reporting indication information comprises at least one of the following:

   index information of the optimal beam result;
   offset information of the optimal beam result relative to at least one first beam, wherein the first beam is a beam that has not been received from the first communication device;
   prediction-associated parameter information of a pre-configured prediction model, wherein the prediction model is used for predicting and obtaining the optimal beam result; and
   beam feature information of the optimal beam result.

7. The beam measurement method according to claim 6, wherein when the first beam reporting indication information comprises the index information of the optimal beam result, the index information of the optimal beam result comprises at least one of the following:

   index information of at least one second target virtual resource, corresponding to the optimal beam result, in an omnidirectional resource set, wherein the second target virtual resource is not used for being transmitted by the first communication device; and
   a channel state information reference signal resource set and reference signal received power of the optimal beam result.

8. The beam measurement method according to claim 6, wherein when the first beam reporting indication information comprises the offset information of the optimal beam result relative to the at least one first beam, the offset information of the optimal beam result relative to the at least one first beam comprises at least one of the following:

   index offset information of the optimal beam result relative to the at least one first beam;

   direction offset information of the optimal beam result relative to the at least one first beam;
   angle offset information of the optimal beam result relative to the at least one first beam; and
   position offset information of the optimal beam result relative to the at least one first beam.

9. The beam measurement method according to claim 6, wherein when the first beam reporting indication information comprises the prediction-associated parameter information of the pre-configured prediction model, the prediction-associated parameter information comprises at least one of the following:

   output vector information; and
   matrix index information.

10. The beam measurement method according to claim 6, wherein when the first beam reporting indication information comprises the beam feature information of the optimal beam result, the beam feature information of the optimal beam result comprises at least one of the following:

    beam direction information of the optimal beam result;
    beam angle information of the optimal beam result;
    beam angle range information of the optimal beam result;
    beam width information of the optimal beam result;
    beam type information of the optimal beam result; and
    position information of adjacent transmitted beams of the optimal beam result.

11. The beam measurement method according to claim 1, wherein before the transmitting optimal beam reporting indication information to the first communication device, the method further comprises:
    transmitting reporting mode indication information to the first communication device, wherein the reporting mode indication information is used for indicating a mode for transmitting the optimal beam reporting indication information.

12. The beam measurement method according to claim 1, wherein when the optimal beam reporting indication information comprises second beam reporting indication information, the second beam reporting indication information comprises at least one of the following:

    index information and beam quality information of a reference signal resource corresponding to the optimal beam result;
    index information of a reference signal resource corresponding to the optimal beam result; index information and beam quality information of reference signal resources corresponding to one part of optimal beams in the optimal beam result, and index information of reference signal resources corresponding to another part of optimal beams in the optimal beam result; and index information, beam quality information, and slot information of a reference signal resource corresponding to the optimal beam result.

13. The beam measurement method according to claim 12, wherein when the second beam reporting indication information comprises the index information of the reference signal resource corresponding to the optimal beam result, the index information of the reference signal resource corresponding to the optimal beam result comprises at least one of the following:

measured index information of the reference signal resource corresponding to the optimal beam result;
index information, obtained based on a pre-configured prediction model, of the reference signal resource corresponding to the optimal beam result; and
index information of a reference signal resource corresponding to an input beam of the pre-configured prediction model, wherein the prediction model is used for predicting and obtaining the optimal beam result.

14. The beam measurement method according to claim 12, wherein when the second beam reporting indication information comprises the index information, beam quality information, and slot information of the reference signal resource corresponding to the optimal beam result, the slot information comprises at least one of the following:

slot offset information;
slot sequence information;
slot application information;
slot position information; and
slot persistence information.

15. The beam measurement method according to claim 1, wherein when the optimal beam result comprises a plurality of optimal beams, the transmitting optimal beam reporting indication information to the first communication device comprises:

sequencing the plurality of optimal beams according to preset time from early to late to obtain a target reporting indication information order; and
starting from a first optimal beam in the target reporting indication information order, transmitting the optimal beam reporting indication information corresponding to the plurality of optimal beams in sequence to the first communication device.

16. A beam measurement method, comprising:

receiving beam recommendation indication information transmitted by a second communication device;
determining a target test beam according to the beam recommendation indication information, wherein the target test beam is configured with a target reference signal resource;
transmitting the target test beam to the second communication device, so that the second communication device to predict and obtain an optimal beam result according to the target reference signal resource; and
receiving optimal beam reporting indication information transmitted by the second communication device, wherein the optimal beam reporting indication information corresponds to the optimal beam result.

17. The beam measurement method according to claim 16, wherein the determining a target test beam according to the beam recommendation indication information comprises:

determining a recommended beam according to the beam recommendation indication information; and
performing reference signal resource configuration on the recommended beam to obtain the target test beam.

18. The beam measurement method according to claim 17, wherein the performing reference signal resource configuration on the recommended beam comprises one of the following:

configuring the target reference signal resource for the recommended beam; and
searching for the target reference signal resource from a pre-configured omnidirectional resource set for the recommended beam, and activating the target reference signal resource, wherein the omnidirectional resource set comprises reference signal resources configured on all beams in a beam space.

19. The beam measurement method according to claim 16, wherein the determining a target test beam according to the beam recommendation indication information comprises:
determining the target test beam carrying beam indication information according to the beam recommendation indication information, , wherein the beam indication information is used for indicating position information of the target test beam in a beam space.

20. The beam measurement method according to claim 16, wherein when the optimal beam reporting indication information comprises first beam reporting indication information, the first beam reporting indication information comprises at least one of the following:

> index information of the optimal beam result;
> offset information of the optimal beam result relative to at least one first beam, wherein the first beam is a beam that has not been transmitted to the second communication device;
> prediction-associated parameter information of a pre-configured prediction model, wherein the prediction model is used for predicting and obtaining the optimal beam result by the second communication device; and
> beam feature information of the optimal beam result.

21. The beam measurement method according to claim 16, wherein before the receiving optimal beam reporting indication information transmitted by the second communication device, the method further comprises:
receiving reporting mode indication information transmitted by the second communication device, wherein the reporting mode indication information is used for indicating a mode for transmitting the optimal beam reporting indication information by the second communication device.

22. The beam measurement method according to claim 16, wherein when the optimal beam reporting indication information comprises second beam reporting indication information, the second beam reporting indication information comprises at least one of the following:

> index information and beam quality information of a reference signal resource corresponding to the optimal beam result;
> index information of a reference signal resource corresponding to the optimal beam result;
> index information and beam quality information of reference signal resources corresponding to one part of optimal beams in the optimal beam result, and index information of reference signal resources corresponding to another part of optimal beams in the optimal beam result; and
> index information, beam quality information, and slot information of a reference signal resource corresponding to the optimal beam result.

23. A beam measurement method, comprising:

> determining a target test beam, wherein the target test beam carries beam indication information,
> and the beam indication information is used for indicating position information of the target test beam in a beam space;
> transmitting the target test beam to a second communication device, so that the second communication device to predict and obtain an optimal beam result according to the beam indication information; and
> receiving optimal beam reporting indication information transmitted by the second communication device, wherein the optimal beam reporting indication information corresponds to the optimal beam result.

24. The beam measurement method according to claim 23, wherein the determining a target test beam comprises:

> receiving beam recommendation indication information transmitted by the second communication device; and
> determining the target test beam according to the beam recommendation indication information, wherein the target test beam is configured with a target reference signal resource.

25. The beam measurement method according to claim 24, wherein the beam recommendation indication information comprises at least one of the following:

> indication information for recommending a reference signal resource index of the target test beam;
> indication information for recommending a sampling interval of the target test beam;
> indication information for recommending a quantity of the target test beam;
> indication information for indicating an index of at least one first test beam group, wherein the first test beam group comprises a plurality of the target test beams;
> indication information for recommending a beam angle of the target test beam;
> indication information for recommending a beam direction of the target test beam;
> indication information for recommending a beam width of the target test beam;
> indication information for recommending a beam type of the target test beam;
> indication information for recommending an angle of arrival or a receiving angle of a transmission channel where the target test beam is located;

indication information for recommending a relative angle of transmitting the target test beam; and

indication information for recommending a relative angle at which the second communication device receives the target test beam.

26. The beam measurement method according to claim 24, wherein the determining a target test beam according to the beam recommendation indication information comprises:

determining a recommended beam according to the beam recommendation indication information; and

performing reference signal resource configuration on the recommended beam to obtain the target test beam.

27. The beam measurement method according to claim 26, wherein the performing reference signal resource configuration on the recommended beam comprises one of the following:

configuring the target reference signal resource for the recommended beam; and

searching for the target reference signal resource from a pre-configured omnidirectional resource set for the recommended beam, and activating the target reference signal resource, wherein the omnidirectional resource set comprises reference signal resources configured on all beams in a beam space.

28. The beam measurement method according to claim 23, wherein the beam indication information comprises at least one of the following:

index information of at least one second test beam group, wherein the second test beam group comprises a plurality of the target test beams;

index information of at least one first target virtual resource, corresponding to the target test beams, in an omnidirectional resource set, wherein the first target virtual resource is not used for being transmitted to the second communication device; and

a control signaling for indicating an activated state of at least one reference signal resource in a pre-configured omnidirectional resource set, wherein the control signaling comprises a signaling field corresponding to the reference signal resource; and when a value of the signaling field is a target data, the control signaling indicates that the reference signal resource is in the activated state.

29. The beam measurement method according to claim 28, wherein when the beam indication information comprises the control signaling for indicating the activated state of the at least one reference signal resource in the pre-configured omnidirectional resource set, the control signaling comprises at least one of the following:

a media access control layer control element signaling; and

a downlink control signaling.

30. The beam measurement method according to claim 23, wherein when the optimal beam reporting indication information comprises first beam reporting indication information, the first beam reporting indication information comprises at least one of the following:

index information of the optimal beam result;

offset information of the optimal beam result relative to at least one first beam, wherein the first beam is a beam that has not been transmitted to the second communication device;

prediction-associated parameter information of a pre-configured prediction model, wherein the prediction model is used for predicting and obtaining the optimal beam result by the second communication device; and

beam feature information of the optimal beam result.

31. The beam measurement method according to claim 30, wherein when the first beam reporting indication information comprises the index information of the optimal beam result, the index information of the optimal beam result comprises at least one of the following:

index information of at least one second target virtual resource, corresponding to the optimal beam result, in an omnidirectional resource set, wherein the second target virtual resource is not used for being transmitted to the second communication device; and

a channel state information reference signal resource set and reference signal received power of the optimal beam result.

32. The beam measurement method according to claim 30, wherein when the first beam reporting indication information comprises the offset information of the optimal beam result relative to the at least one first beam, the offset information of the optimal beam result relative to the at least one first beam comprises at least one of the following:

index offset information of the optimal beam result relative to the at least one first beam; direction offset information of the optimal beam result relative to the at least one first beam; angle offset information of the optimal beam result relative to the at least one first beam; and position offset information of the optimal beam result relative to the at least one first beam.

33. The beam measurement method according to claim 30, wherein when the first beam reporting indication information comprises the prediction-associated parameter information of a pre-configured prediction model, the prediction-associated parameter information comprises at least one of the following:

output vector information; and matrix index information.

34. The beam measurement method according to claim 30, wherein when the first beam reporting indication information comprises the beam feature information of the optimal beam result, the beam feature information of the optimal beam result comprises at least one of the following:

beam direction information of the optimal beam result; beam angle information of the optimal beam result; beam angle range information of the optimal beam result; beam width information of the optimal beam result; beam type information of the optimal beam result; and position information of adjacent transmitted beams of the optimal beam result.

35. The beam measurement method according to claim 23, wherein before the receiving optimal beam reporting indication information transmitted by the second communication device, the method further comprises: receiving reporting mode indication information transmitted by the second communication device, wherein the reporting mode indication information is used for indicating a mode for transmitting the optimal beam reporting indication information by the second communication device.

36. The beam measurement method according to claim 23, wherein when the optimal beam reporting indication information comprises second beam reporting indication information, the second beam reporting indication information comprises at least one of the following:

index information and beam quality information of a reference signal resource corresponding to the optimal beam result; index information of a reference signal resource corresponding to the optimal beam result; index information and beam quality information of reference signal resources corresponding to one part of optimal beams in the optimal beam result, and index information of reference signal resources corresponding to another part of optimal beams in the optimal beam result; and index information, beam quality information, and slot information of a reference signal resource corresponding to the optimal beam result.

37. The beam measurement method according to claim 36, wherein when the second beam reporting indication information comprises the index information of the reference signal resource corresponding to the optimal beam result, the index information of the reference signal resource corresponding to the optimal beam result comprises at least one of the following:

index information, measured by the second communication device, of the reference signal resource corresponding to the optimal beam result; index information, obtained by the second communication device based on a pre-configured prediction model, of the reference signal resource corresponding to the optimal beam result; and index information of a reference signal resource corresponding to an input beam of the pre-configured prediction model, wherein the prediction model is used for predicting and obtaining the optimal beam result by the second communication device.

38. The beam measurement method according to claim 36, wherein when the second beam reporting indication information comprises the channel state information reference signal resource set, beam quality information, and slot information of the optimal beam result, the slot information comprises at least one of the following:

slot offset information; slot sequence information; slot application information; slot position information; and slot persistence information.

39. A beam measurement method, comprising:

receiving a target test beam transmitted by a first communication device, wherein the target test beam is determined by the first communication device; the target test beam carries beam indication information, and the beam indication information is used for indicating position information of the target test beam in a beam space; predicting and obtaining an optimal beam result according to the beam indication information, and transmitting optimal beam reporting indication information to the first communication device, wherein the optimal beam reporting indication information corresponds to the optimal beam result.

40. The beam measurement method according to claim 39, wherein before the receiving a target test beam transmitted by a first communication device, the method further comprises:
transmitting beam recommendation indication information to the first communication device, so that the first communication device to determine the target test beam according to the beam recommendation indication information, wherein the target test beam is configured with a target reference signal resource.

41. The beam measurement method according to claim 39, wherein when the optimal beam reporting indication information comprises first beam reporting indication information, the first beam reporting indication information comprises at least one of the following:

    index information of the optimal beam result;
    offset information of the optimal beam result relative to at least one first beam, wherein the first beam is a beam that has not been received from the first communication device;
    prediction-associated parameter information of a pre-configured prediction model, wherein the prediction model is used for predicting and obtaining the optimal beam result; and
    beam feature information of the optimal beam result.

42. The beam measurement method according to claim 39, wherein before the transmitting optimal beam reporting indication information to the first communication device, the method further comprises:
transmitting reporting mode indication information to the first communication device, wherein the reporting mode indication information is used for indicating a mode for transmitting the optimal beam reporting indication information.

43. The beam measurement method according to claim 39, wherein when the optimal beam reporting indication information comprises second beam reporting indication information, the second beam reporting indication information comprises at least one of the following:

    index information and beam quality information of a reference signal resource corresponding to the optimal beam result;
    index information of a reference signal resource corresponding to the optimal beam result;
    index information and beam quality information of reference signal resources corresponding to one part of optimal beams in the optimal beam result, and index information of reference signal resources corresponding to another part of optimal beams in the optimal beam result; and
    index information, beam quality information, and slot information of a reference signal resource corresponding to the optimal beam result.

44. The beam measurement method according to claim 39, wherein when the optimal beam result comprises a plurality of optimal beams, the transmitting optimal beam reporting indication information to the first communication device comprises:

    sequencing the plurality of optimal beams according to preset time from early to late to obtain a target reporting indication information order; and
    starting from a first optimal beam in the target reporting indication information order, transmitting the optimal beam reporting indication information corresponding to the plurality of optimal beams in sequence to the first communication device.

45. A user apparatus, comprising:

    at least one processor; and
    at least one memory, configured to store at least one program,
    wherein the at least one program, when executed by the at least one processor, implements the beam measurement method according to any one of claims 1 to 15, or implements the beam measurement method according to any one of claims 39 to 44.

46. A base station, comprising:

    at least one processor; and
    at least one memory, configured to store the at least one program,
    wherein the at least one program, when executed by the at least one processor, implements the beam measurement method according to any one of claims 16 to 38.

47. A computer-readable storage medium, having processor-executable programs stored thereon, wherein the processor-executable programs, when executed by a processor, are configured to implement the beam measurement method according to any one of claims 1 to 44.

48. A computer program product, comprising computer programs or computer instructions, wherein the computer programs or the computer instructions are stored on a computer-readable storage medium; a processor of a computer device reads the computer programs or the computer instructions from the computer-readable storage medium; and the processor executes the computer programs or the computer instructions, so that the computer device to perform the beam measurement method according to any one of claims 1 to 44.

Fig. 1

| Transmit beam recommendation indication information to a first communication device to cause the first communication device to determine a target test beam according to the beam recommendation indication information, wherein the target test beam is configured with a target reference signal resource | S110 |

| Receive the target test beam transmitted by the first communication device | S120 |

| Predict and obtain an optimal beam result according to the target reference signal resource, and transmit optimal beam reporting indication information to the first communication device, wherein the optimal beam reporting indication information corresponds to the optimal beam result | S130 |

Fig. 2

Terminal A                    Terminal B

Fig. 3

Fig. 4

Set A                    Set B

Fig. 5

Sequence a plurality of optimal beams according to preset time from early to late to obtain a target reporting indication information order — S1301

Starting from a first optimal beam in the target reporting indication information order, transmit optimal beam reporting indication information corresponding to the plurality of optimal beams in sequence to a first communication device — S1302

Fig. 6

Receive beam recommendation indication information transmitted by a second communication device — S210

Determine a target test beam according to the beam recommendation indication information, wherein the target test beam is configured with a target reference signal resource — S220

Transmit the target test beam to the second communication device to cause the second communication device to predict and obtain an optimal beam result according to the target reference signal resource — S230

Receive optimal beam reporting indication information transmitted by the second communication device, wherein the optimal beam reporting indication information corresponds to the optimal beam result — S240

Fig. 7

Determine a recommended beam according to beam recommendation indication information — S2201

Perform reference signal resource configuration on the recommended beam to obtain a target test beam — S2202

Fig. 8

```
┌─────────────────────────────────────────────────┐
│   Receive beam recommendation indication information │        S210
│   transmitted by a second communication device       │
└─────────────────────────────────────────────────┘
                        │
                        ▼
┌─────────────────────────────────────────────────┐
│   Determine a target test beam carrying beam indication │
│   information according to the beam recommendation indication │
│   information, wherein the beam indication information is used for │  S2203
│   indicating position information of the target test beam in a beam │
│   space                                               │
└─────────────────────────────────────────────────┘
                        │
                        ▼
┌─────────────────────────────────────────────────┐
│   Transmit the target test beam to the second communication │
│   device to cause the second communication device to predict and │  S230
│   obtain an optimal beam result according to the target reference │
│   signal resource                                     │
└─────────────────────────────────────────────────┘
                        │
                        ▼
┌─────────────────────────────────────────────────┐
│   Receive optimal beam reporting indication information │
│   transmitted by the second communication device, wherein the │  S240
│   optimal beam reporting indication information corresponds to the │
│   optimal beam result                                 │
└─────────────────────────────────────────────────┘
```

Fig. 9

Terminal A                    Terminal B

Fig. 10

Determine a target test beam, wherein the target test beam carries beam indication information, and the beam indication information is used for indicating position information of the target test beam in a beam space — S310

Transmit the target test beam to a second communication device to cause the second communication device to predict and obtain an optimal beam result according to the beam indication information — S320

Receive optimal beam reporting indication information transmitted by the second communication device, wherein the optimal beam reporting indication information corresponds to the optimal beam result — S330

Fig. 11

Receive beam recommendation indication information transmitted by a second communication device — S3101

Determine a target test beam according to the beam recommendation indication information, wherein the target test beam is configured with a target reference signal resource — S3102

Fig. 12

Receive a target test beam transmitted by a first communication device, wherein the target test beam is determined by the first communication device; the target test beam carries beam indication information, and the beam indication information is used for indicating position information of the target test beam in a beam space ⟋ S410

Predict and obtain an optimal beam result according to the beam indication information, and transmit optimal beam reporting indication information to the first communication device, wherein the optimal beam reporting indication information corresponds to the optimal beam result ⟋ S420

Fig. 13

Transmit beam recommendation indication information to a first communication device to cause the first communication device to determine a target test beam according to the beam recommendation indication information, wherein the target test beam is configured with a target reference signal resource ⟋ S430

Receive the target test beam transmitted by the first communication device, wherein the target test beam is determined by the first communication device; the target test beam carries beam indication information, and the beam indication information is used for indicating position information of the target test beam in a beam space ⟋ S410

Predict and obtain an optimal beam result according to the beam indication information, and transmit optimal beam reporting indication information to the first communication device, wherein the optimal beam reporting indication information corresponds to the optimal beam result ⟋ S420

Fig. 14

Processor 210

200

Memory 220

User equipment

Fig. 15

Processor 310

300

Memory 320

Base station

Fig. 16

<div align="center">

**INTERNATIONAL SEARCH REPORT**

</div>

| | International application No. |
|---|---|
| | **PCT/CN2023/110572** |

| **A.** | **CLASSIFICATION OF SUBJECT MATTER** |
|---|---|
| | H04W24/08(2009.01)i; H04W72/04(2023.01)i |

According to International Patent Classification (IPC) or to both national classification and IPC

| **B.** | **FIELDS SEARCHED** |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; ENTXTC; WPABSC; VEN; ENTXT; CNKI; 3GPP: 终端, 考虑, 能力, 波束, 测量, 上报, 训练, UE?, consider+, capabili+, beam, measurement, report+, train+, AI

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 108521878 A (BEIJING XIAOMI MOBILE SOFTWARE CO., LTD.) 11 September 2018 (2018-09-11) description, paragraphs [0161]-[0236] and [0333]-[0350] | | 1-48 |
| X | WO 2021159407 A1 (NOKIA TECHNOLOGIES OY et al.) 19 August 2021 (2021-08-19) description, page 6, line 18 to page 20, line 14 | | 1-48 |
| A | CN 110602629 A (BEIJING SPREADTRUM HIGH-TECH COMMUNICATIONS TECHNOLOGY CO., LTD.) 20 December 2019 (2019-12-20) entire document | | 1-48 |
| A | CN 108633068 A (HUAWEI TECHNOLOGIES CO., LTD.) 09 October 2018 (2018-10-09) entire document | | 1-48 |
| A | CN 109150254 A (VIVO MOBILE COMMUNICATION CO., LTD.) 04 January 2019 (2019-01-04) entire document | | 1-48 |
| A | US 2018234959 A1 (LG ELECTRONICS INC.) 16 August 2018 (2018-08-16) entire document | | 1-48 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 October 2023** | **09 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110572**

| Patent document cited in search report | | | Publication date (day/month/year) | Patent family member(s) | | | Publication date (day/month/year) |
|---|---|---|---|---|---|---|---|
| CN | 108521878 | A | 11 September 2018 | US | 2020053588 | A1 | 13 February 2020 |
| | | | | US | 11304083 | B2 | 12 April 2022 |
| | | | | EP | 3605918 | A1 | 05 February 2020 |
| | | | | EP | 3605918 | A4 | 08 April 2020 |
| | | | | EP | 3605918 | B1 | 12 October 2022 |
| | | | | WO | 2018218444 | A1 | 06 December 2018 |
| WO | 2021159407 | A1 | 19 August 2021 | EP | 4082275 | A1 | 02 November 2022 |
| | | | | EP | 4082275 | A4 | 28 December 2022 |
| | | | | BR | 112022015937 | A2 | 04 October 2022 |
| | | | | US | 2023094748 | A1 | 30 March 2023 |
| CN | 110602629 | A | 20 December 2019 | | None | | |
| CN | 108633068 | A | 09 October 2018 | CA | 3044493 | A1 | 27 September 2018 |
| | | | | CA | 3044493 | C | 31 August 2021 |
| | | | | BR | 112019011295 | A2 | 08 October 2019 |
| | | | | EP | 3537809 | A1 | 11 September 2019 |
| | | | | EP | 3537809 | A4 | 08 January 2020 |
| | | | | US | 2019261345 | A1 | 22 August 2019 |
| | | | | US | 11064492 | B2 | 13 July 2021 |
| | | | | JP | 6991221 | B2 | 12 January 2022 |
| CN | 109150254 | A | 04 January 2019 | WO | 2018228471 | A1 | 20 December 2018 |
| US | 2018234959 | A1 | 16 August 2018 | US | 10433312 | B2 | 01 October 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210961436